# EUROPÄISCHE PATENTSCHRIFT

(11) **EP 3 341 525 B1**
(45) Veröffentlichungstag und Bekanntmachung des Hinweises auf die Patenterteilung: **30.01.2019**
(21) Anmeldenummer: 16754169.7
(22) Anmeldetag: 09.07.2016
(51) Int. Cl.: E02B 1/02, A01K 61/54

(54) **VORRICHTUNG ZUR SIMULATION VON EBBE UND FLUT**
DEVICE FOR SIMULATING EBB AND FLOW
DISPOSITIF DE SIMULATION DE FLUX ET REFLUX

(30) Priorität: 27.08.2015 DE 102015011264
(43) Veröffentlichungstag der Anmeldung: 04.07.2018
(73) Patentinhaber: ALFRED-WEGENER-INSTITUT, 27570 Bremerhaven (DE)
(72) Erfinder: PANSCH, Andreas, 16775 Stechlin (DE)
(86) Internationale Anmeldenummer: PCT/DE2016/000270
(87) Internationale Veröffentlichungsnummer: WO 2017/032352

(56) Entgegenhaltungen:
- KR-A- 20090 080 260

## Beschreibung

Die Erfindung bezieht sich auf eine Vorrichtung zur Simulation von Ebbe und Flut mit zumindest einem mit Wasser bis zu einer konstanten Füllhöhe gefüllten Behälter und einer horizontal angeordneten Substratplatte, die mittels einer über einen Motor höhenverstellbaren Aufhängungsvorrichtung, über die die Substratplatte in einer oberen Höhenposition zur Simulation des Wasserstandes bei Ebbe und in einer unteren Höhenposition zur Simulation des Wasserstandes bei Flut halterbar ist, an einem Gestell befestigt ist.

Zunehmende menschliche Aktivitäten auf der Erde verursachen auch lokale bis globale Änderungen in den Oberflächentemperaturen und Spiegelhöhen der Meere, sie forcieren deren Versauerung und Nährstoffanreicherung. Viele wissenschaftliche Laborexperimente erforschen diese Veränderungen anhand von Organismen, Lebensgemeinschaften und verschiedenen Stressfaktoren. Es zeigen sich jedoch unterschiedliche Antworten in und unter den untersuchten verschiedenen Arten, wobei verschiedene Stresskombinationen synergetische, additive oder gegensätzliche Effekte bewirken können. Nur möglichst großskalige Experimente mit vielen verschiedenen Arten und Stressoren sind geeignet, zukünftige Entwicklungen von Umweltveränderungen realistisch einschätzen zu können. Derartige Experimente basieren auf der möglichst naturgetreuen Abbildung eines natürlichen Biotops unter kontrollierten Bedingungen, wozu bevorzugt so genannte "Mesokosmen" als begrenzter Naturausschnitt eingesetzt werden. Benthische Mesokosmen bilden den Wasserbereich in Bodennähe mit den dort lebenden Organismen und deren Wechselwirkungen ab. Insbesondere für Untersuchungen im Wattenmeer sind Experimente mit benthischen Mesokosmen unersetzlich, wobei die Gezeiten mit Ebbe und Flut möglichst naturgetreu simuliert werden müssen. Ebbe ist der gesamte Strömungsvorgang vom anstehenden Hochwasser bis zum Erreichen des Niedrigwassers. Analog ist Flut der gesamte Strömungsvorgang vom anstehenden Niedrigwasser bis zum Erreichen des Hochwassers. Die Strömungsvorgänge Ebbe und Flut dauern jeweils etwas mehr als sechs Stunden an. Nach Erreichen des Hochwassers (maximaler Stand) bei Flut bzw. des Niedrigwassers (minimaler Stand) bei Ebbe wird der Strömungsvorgang entsprechend umgekehrt. Für die Gezeitensimulation gibt es eine Reihe von verschiedenen Vorrichtungen im Stand der Technik.

### Stand der Technik

Fast alle Mesokosmen zur Simulation der Gezeiten arbeiten mit Pumpen zum Zu- und Abpumpen des Wassers. Aus der WO 2004/021774 A1 ist beispielsweise eine Vorrichtung zur Simulation von Ebbe und Flut bekannt, bei der in einem Behälter zur Lagerung und zum Transport von Schalentieren der Wasserspiegel entsprechend verändert wird. Dazu wird mittels einer Pumpe das Wasser ab- und wieder zugeführt. Nachteilig ist hierbei das Umpumpen der Wassermassen, für das zusätzlich Lagerbehälter benötigt werden.

Eine ähnliche Vorrichtung, jedoch nunmehr zu Forschungszwecken ist aus der **Veröffentlichung** "A simple, inexpensive, an field-relevant microcosm tidal simulator for use in marsh macrophyte studies" von R.M. MacTavish et al (in Applications in Plant Sciences 2014 2(11):1400058, Seiten 1 bis 6) bekannt. Auch hier werden Pumpen zur Füllhöhenänderung in den Behältern eingesetzt. Desweiteren wird eine Übersicht über existierende Tidensimulatoren gegeben, siehe Tabelle 1. Es ist ersichtlich, dass alle mit Wasserpumpen und damit mit Veränderungen der Wasserstandshöhe arbeiten. Neben der Gefahr, dass auch Organismen gepumpt werden, sind die durch die Bewegung der Wassermassen hervorgerufenen Veränderungen von relevanten Parametern für wissenschaftliche Untersuchungen besonders ungünstig.

Eine Verbesserung bietet hier die Vorrichtung zur Gezeitensimulation an, die in der KR 10 2009 0080260 A offenbart wird und von der die vorliegende Erfindung als nächstliegendem Stand der Technik ausgeht. Bei dieser Vorrichtung, die der Erforschung von sesshaften Organismen in der Tidenzone dient, wird eine "invertierte Tidensimulation" durchgeführt. Die zu untersuchenden Organismen stehen in Verbindung mit einer horizontal angeordneten Substratplatte, die über eine Aufhängungsvorrichtung an einem Gestell befestigt ist. Die Aufhängungsvorrichtung ist über einen Motor höhenverstellbar ausgebildet, sodass die Substratplatte in ihrer Höhenlage veränderbar ist. Befindet sich die Substratplatte in einer oberen Höhenposition, wird für die Organismen der Wasserstand bei Ebbe simuliert. Befindet sich die Substratplatte in einer unteren Höhenposition, wird für die Organismen der Wasserstand bei Flut simuliert.

In dem bekannten Behälter befinden sich einzelne kleine Wasserbehälter mit jeweils einer abgeschlossenen Wassermenge konstanter Wasserhöhe. Die Organsimen sollen offenbar ohne einen Wasseraustausch untereinander untersucht werden. Um die kleinen Wasserbehälter herum befindet sich in dem großen Behälter temperiertes Wasser zur Konstanthaltung der Wassertemperatur in den kleinen Wasserbehältern. Dabei ist die Wasserhöhe in dem großen Behälter ebenfalls konstant, bewegt sich aber nur im unteren Bereich des Behälters, da sie die Wandungshöhe der kleinen Behälter nicht übersteigen darf. Die Substratplatte befindet sich also in ihren verschiedenen Höhenpositionen immer außerhalb des Wassers. Sie weist auf ihrer Unterseite für jeden kleinen Wasserbehälter eine eigene Halterung auf, an deren Ende sich angesiedelte Organismen befinden. Durch die Höhenverstellung der Substratplatte werden die Halterungsenden unterschiedlich tief in dem Wasser in den kleinen Behältern positioniert. Bei Flut sind sie ganz unten in den kleinen Behältern, und es befindet sich viel Wasser über den Organismen, bei Ebbe sind sie ganz aus dem Wasser gehoben und es befindet sich kein Wasser über den Organismen.

Die bekannte Anordnung ist aufgrund der kleinen Behälter nur für relativ kleine, isolierte Organismen geeignet. Das Wasser in den kleinen Behältern ist unbewegt. Insofern unterliegen die Organismen keinerlei Strömungseinflüssen, da auch ihre simulierende Auf- und Abbewegung sehr langsam durchgeführt wird und keine Relativbewegung erzeugt.

Aus der DE 10 2011 054 781 A1 ist noch eine Vorrichtung zur Untersuchung von Küstenschutz- bzw. Kolkschutzmaßnahmen bekannt, bei der das zu untersuchende Element und eine bewegliche Strömungsquelle verdrehbar zueinander angeordnet sind. Da das Element relativ groß und schwer ist, wird zur Simulation der Strömung bei Ebbe und Flut die Strömungsquelle um 180° um das Element verschwenkt. So trifft die Strömung bei Ebbe von der einen Seite und bei Flut von der gegenüberliegenden Seite auf das Element. Weitere Angaben und Ausführungen über Art und Ausgestaltung der Strömungsquelle werden aber nicht gemacht.

### Aufgabenstellung

Ausgehend von der weiter oben beschriebenen gattungsgemäßen Anordnung zur Tidensimulation gemäß der KR 10 2009 0080260 A ist die **Aufgabe** für die vorliegende Erfindung darin zu sehen, diese Anordnung so weiterzubilden, dass auch größere Organismen, insbesondere auch im Verbund miteinander und mit anderen Organismen, der Simulation unterworfen werden können. Dabei sollen aber vor allem die Strömungsverhältnisse möglichst realitätsgetreu nachgebildet werden, sodass eine sehr realitätsnahe Tidensimulation erreicht werden kann. Die Mittel zur Realisierung der Anordnung sollen dabei möglichst einfach, wartungsarm und kostengünstig sein. Die **Lösung** für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Die beanspruchte Vorrichtung ist erfindungsgemäß zum einen dadurch gekennzeichnet, dass die konstante Füllhöhe bis in den oberen Bereich des Behälters reicht und die Substratplatte auch im Wasser höhenverstellbar angeordnet ist. Durch das gegenüber dem Stand der Technik wesentlich vergrößerte Wasservolumen können auch größere Organismen, Konsortien und Lebensgemeinschaften unter Tideneinfluss untersucht werden. Weiterhin ist eine Substratplatte vorgesehen, auf der die Organismen direkt angesiedelt werden. Die gesamte Substratplatte befindet sich vorwiegend im Wasser und ist dort entlang der Wassersäule in unterschiedlichen Höhen positionierbar. Bei Bedarf kann die Substratplatte aber auch außerhalb des Wassers positioniert werden.

Zusätzlich werden bei der erfindungsgemäßen Vorrichtung die auftretenden Strömungsverhältnisse bei Ebbe und Flut sehr naturgetreu simuliert. Dazu ist die beanspruchte Vorrichtung erfindungsgemäß zum anderen dadurch gekennzeichnet, dass eine Strömungseinrichtung mit zumindest einer Pumpe, einer Steuerungseinrichtung und zwei ebene Rohranordnungen vorgesehen ist, die entlang der Füllhöhe des Wassers an gegenüberliegenden Seiten des Behälters angeordnet sind und einander gegenüberliegende Strömungsöffnungen aufweisen. In einer ersten Steuerungsphase der Steuerungseinrichtung ist erfindungsgemäß in die eine Rohranordnung zur Simulation der Strömungsverhältnisse bei Ebbe und in einer zweiten Steuerungsphase in die gegenüberliegende Rohranordnung zur Simulation der Strömungsverhältnisse bei Flut Wasser pumpbar. Weiterhin ist erfindungsgemäß die höhenverstellbare Aufhängungsvorrichtung mit der Steuerungsvorrichtung bezüglich der Simulation von Ebbe und Flut synchronisiert.

Es ergeben sich nachfolgende Vorteile für die Vorrichtung nach der Erfindung:
- Es werden nicht nur die veränderlichen Wasserstände während der Gezeiten (Tiden), sondern auch die wechselnden Strömungen simuliert.
- Durch die ebenen Rohranordnungen wird eine naturgetreue laminare Strömung im Behälter erzeugt.
- Für die Gezeitensimulation werden keine zusätzlichen Behälter zum Umpumpen des Wassers benötigt, was Ausrüstung und Platz spart.
- Das Wasser verbleibt ständig im Behälter, das Wasservolumen ist konstant. Somit bleibt die gesamte Wasserchemie und -parametrierung konstant bzw. wird nicht durch das Pumpen und Verweilen in einem anderen Behälter beeinflusst, was für darauf abstellende Experimente wesentlich ist.
- Die Einsparung externer Pumpen verhindert die mechanische Zerstörung kleinster Organismen und damit eine Beeinflussung der Experimente.
- Es ergibt sich durch die Höhenverstellbarkeit der Substratplatte eine optimale Möglichkeit zur Probennahme.

Bei der erfindungsgemäßen Vorrichtung wird in jedem Behälter gezielt eine Strömung erzeugt, die der natürlichen Strömung bei Ebbe und Flut entspricht. Ebbe und Flut treten jeweils zweimal an einem Tag auf. Bei Ebbe handelt es sich um eine ablaufende Strömung. Diese wird im Behälter durch eine Strömung von der einen Seite auf die Organsimen simuliert. Da die Ebbe über einen Zeitraum von etwas mehr als sechs Stunden herrscht, wird über diesen Zeitraum auch die ablaufende Strömung simuliert. Bei Flut herrscht eine auflaufende Strömung. Diese wird an den Organismen durch eine Strömung von der genau gegenüberliegenden Seite auf die Organismen simuliert. Dabei wird auch die auflaufende Strömung etwas mehr als sechs Stunden aufrechterhalten. Zur Erzeugung einer besonders gleichmäßigen Strömung über die Wasserhöhe im Behälter ist es bevorzugt und vorteilhaft, wenn jede Rohranordnung in Form eines Strömungsgitters mit parallelen Rohrabschnitten ausgebildet ist, das sich über die konstante Füllhöhe des Wassers erstreckt. Die Rohrabschnitte verlaufen dabei bevorzugt parallel zum Behälterboden und erzeugen eine laminare horizontale Strömung relativ zu den Organismen. Dies entspricht in guter Näherung den realen Strömungsverhältnissen. Da durch die Rohre auch Wasser aus den Behältern gepumpt werden kann, was ggfs. mit Sand und Schmutzpartikeln versetzt ist, ist es sinnvoll, wenn die einzelnen Rohre Reinigungsverschraubungen aufweisen. Diese können sich beispielsweise in der Mitte der Rohre befinden, sodass das Rohgitter in zwei symmetrische Teile zerlegbar ist und leicht gereinigt werden kann. Weitere Details sind den Ausführungsbeispielen zu entnehmen.

Bei der erfindungsgemäßen Vorrichtung wird die besonders realitätsgetreue Tidensimulation vor allem auch durch die Simulation der Wasserströmung bewirkt, die ständig größten Änderungen unterworfen ist. Zur Erzeugung der Wasserströmung ist grundsätzlich zumindest eine Pumpe erforderlich. Beispielsweise kann vorgesehen sein, dass mit beiden Rohranordnungen eine gemeinsame Pumpe verbunden ist, die im Behälter angeordnet ist und entweder in ihrer Pumprichtung umschaltbar oder mit einem Vierwegeventil verbunden ist. Es liegt dann im Behälter ein Kreislauf über die beiden Rohranordnungen und die Pumpe vor. Je nach Pumpenrichtung stößt die eine Rohranordnung Wasser aus, die andere saugt Wasser an. Bei Verwendung eines Vierwegeventils ist der Kreislauf unter Einbeziehung des Wassers zwischen den beiden Rohranordnungen ebenfalls geschlossen. Das Vierwegeventil wird dann entsprechend auf die eine oder die gegenüberliegende Rohranordnung geschaltet. Alternativ kann bei der Erfindung bevorzugt und vorteilhaft vorgesehen sein, dass im Behälter für jede Rohranordnung eine separate Pumpe vorgesehen ist, die einen Ansaugstutzen für das Wasser im Behälter und einen Auslassstutzen, der mit der jeweiligen Rohranordnung verbunden ist, aufweist. Je nach Strömungsrichtung ist dann immer nur eine Pumpe in Betrieb. In beiden Fällen wird das Wasser stets im Behälter umgewälzt und nicht aus diesem herausgeleitet. Weiterhin ist bevorzugt und vorteilhaft die Pumpe jeweils im unteren Bereich der Rohranordnung mit dieser verbunden, da dort der Druck durch die anstehende Wassersäule am größten ist. Es entsteht in etwa ein gleicher Ausströmdruck aus allen übereinander liegenden parallelen Rohrabschnitten. Auf diese Weise ist ein gleichmäßiger Strömungsdruck über die gesamte Wasserhöhe gewährleistet. Um den Strömungsdruck erforderlichenfalls zu verändern, kann die Pumpe auch in ihrem Pumpendruck veränderlich einstellbar sein. Insbesondere kann zu Beginn der Ebbe- oder Flutphase der Strömungsdruck größer sein als zum Ende hin. Auch hierdurch wird weitere Realitätsnähe bewirkt. Um zu vermeiden, dass Organismen in die Pumpen eindringen und ggfs. zerstört werden, ist es vorteilhaft, wenn vor dem Ansaugstutzen der Pumpen ein Filter angeordnet ist.

Damit das aus der einen Rohranordnung herausgepumpte Wasser gut im Behälter zirkuliert, ist es weiterhin bevorzugt und vorteilhaft, wenn der Behälter zylindrisch ausgebildet ist. Das strömende Wasser trifft dann jeweils hinter der nicht aktiven Rohranordnung auf die gerundete Behälterwandung und strömt nach beiden Richtungen an der Behälterwandung entlang zur aktiven Pumpe zurück. Auf diese Weise wird die für die Simulation relevante Strömung durch die Behältermitte nicht gestört. Insgesamt kann jeder Behälter als geschlossenes oder als offenes Wassersystem ausgebildet sein. Bei einem geschlossenen System wird das Wasser im Umlauf gehalten. Neues Wasser wird nicht oder nur in speziellen Fällen zugegeben. Die Konstanthaltung vorgegebener Parameter erfolgt dann über entsprechende Vorrichtungen. Ein kontinuierlicher Messbetrieb ist möglich. In einem offenen System wird im Messbetrieb kontinuierlich frisches Wasser zugeführt und parametriert. Es wird täglich so viel Wasser zugeführt, wie die Behälter fassen können. Ein völliger Austausch des Wasserkörpers dauert dadurch länger als einen Tag. Ein vollständiger Wasseraustausch bei unterbrochenem Messbetrieb ist ebenfalls möglich.

Des Weiteren kann die Substratplatte bevorzugt und vorteilhaft als Gitterplatte ausgebildet sein. Organismen können dann gut auf ihr wachsen bzw. sich anheften. Eine Wasserumspülung von allen Seiten, auch durch die Gitterplatte hindurch, ist gegeben. Je nach Ausbildung der Substratplatte kann diese biegesteif sein und beispielsweise an einer zentralen höhenverstellbaren Aufhängungsvorrichtung befestigt sein. Die Substratplatte kann aber beispielsweise auch an mehreren Stellen mit einem Draht befestigt sein. Um ein seitliches Schlingern der Platte beim Hieven und Fieren zu verhindern, ist es dann vorteilhaft und bevorzugt, wenn die Substratplatte an vertikalen Führungsstangen geführt ist.

Bei der Vorrichtung zur Tidensimulation kann weiterhin der Ablauf von Ebbe und Flut durch die Steuerungsvorrichtung sehr naturgetreu nachgebildet werden. So kann bevorzugt und vorteilhaft vorgesehen sein, dass die Steuerungsphasen der Steuerungseinrichtung linear oder sinusförmig oder beliebig programmierbar ausgebildet sind. Entsprechend ist der Verlauf der Ebbe und Flut dann linear, d.h. in der Änderung konstant verlaufend, oder sinusförmig, d.h. mit variablen Änderungen. Andere Verläufe sind ebenfalls möglich und frei programmierbar. Auch ist es möglich, bei mehreren Behältern den Gezeitenablauf versetzt zu steuern, sodass in einem Behälter Ebbe und in einem anderen Behälter Flut herrscht. Mit allen Verläufen ist die höhenverstellbare Aufhängungsvorrichtung synchronisierbar, sodass die Position des Substrats und damit die Wasserhöhe oberhalb (und auch unterhalb) der Organismen entsprechend dem Strömungsverlauf anpassbar ist. Dabei ist es vorteilhaft und bevorzugt, wenn die höhenverstellbare Aufhängungsvorrichtung schrittweise verstellbar ausgebildet ist. Die Hub- und Absenkvorgänge dauern jeweils ca. sechs Stunden. Mit einer schrittweisen Verstellung können jeweils kleinste Wege eingestellt werden.

Oberstes Ziel der Vorrichtung zur Tidensimulation nach der Erfindung ist die möglichst naturgetreue Nachahmung der Umweltverhältnisse. Dazu gehört auch die Wasserqualität. Deshalb können bei der beanspruchten Vorrichtung bevorzugt und vorteilhaft verschiedene Wasseraufbereitungsvorrichtungen vorgesehen sein. Hierbei kann es sich im Einzelnen beispielsweise um Heiz- und Kühlaggregate, Wärmetauscher, Filter, Rührer, zentrale Zirkulationspumpen, Anreicherungs- oder Abreicherungsanlagen für Sauerstoff, CO₂ oder Salzgehalt handeln. Desweiteren dient die beanspruchte Vorrichtung nach der Erfindung wissenschaftlichen Untersuchungen, die auf belegbaren Messergebnissen beruhen. Deshalb ist es bevorzugt und vorteilhaft, wenn verschiedene Messsensoren, welche im Wasser, bevorzugt in einem Bypass vom Behälter angeordnet sind, verschiedene Wasserparameter messen und aufzeichnen. Zu den zu erhebenden Messparametern zählen Temperatur, Sauerstoffgehalt, Salzgehalt und der pH-Wert des Wassers.

Im Hinblick auf die konstruktive Ausführung der beanspruchten Vorrichtung ist es weiterhin bevorzugt und vorteilhaft, wenn das Gestell für die Aufhängungsvorrichtung als Portal ausgebildet ist. Dieses ist oberhalb des Behälters positioniert und ermöglicht ein einfaches Verfahren der Substratplatte. Weiterhin kann vorteilhaft vorgesehen sein, dass der Behälter mit einem lichtdurchlässigen Deckel abgedeckt ist. Dieser verhindert Sand-, Nährstoff- und Regeneintrag von oben und hält Tiere fern. Seitliche Klappen im Deckel können für eine gute Zugänglichkeit des Behälterinneren sorgen. Schließlich kann bei der beanspruchten Vorrichtung noch vorteilhaft und bevorzugt vorgesehen sein, dass zumindest zwei Behälter nebeneinander angeordnet sind. Es ergibt sich ein Versuchsfeld, in dem beispielsweise 12 Behälter in zwei Reihen von je 6 Behältern nebeneinander angeordnet sind. Zum einen treten Synergieeffekte durch Nutzung von gemeinsamen Ressourcen durch zwei oder mehr Behälter auf, zum anderen erhöht sich die Qualität der wissenschaftlichen Untersuchungen durch die Vergrößerung der Probenmenge. Bereits eingangs wurde die die Notwendigkeit von benthischen Mesokosmen für die wissenschaftliche Erforschung von Vorgängen im Bodenbereich erwähnt. Der Behälter nach der Erfindung kann in besonders geeigneter Weise als benthischer Mesokosmos ausgebildet sein. Unter dem Einfluss der gut simulierten Gezeiten können dann besonders naturgetreu die Lebensvorgänge im Wattenmeer erforscht werden. Weitere Details zu der Erfindung und möglicher Ausführungsformen sind den nachfolgenden Ausführungsbeispielen zu entnehmen.

### Ausführungsbeispiele

Nachfolgend werden die Vorrichtung zur Simulation von Ebbe und Flut nach der Erfindung und ihre vorteilhaften Modifikationen anhand der schematischen Figuren zum besseren Verständnis der Erfindung an Ausführungsbeispielen noch weitergehend erläutert. Dabei zeigt die
- **Figur 1**: eine Prinzipdarstellung der Anordnung während Ebbe,
- **Figur 2**: eine Prinzipdarstellung der Anordnung während Flut,
- **Figur 3**: eine Seitenansicht der Anordnung,
- **Figur 4**: eine Draufsicht auf die Anordnung und
- **Figur 5**: eine schematische Ansicht der Rohranordnung.

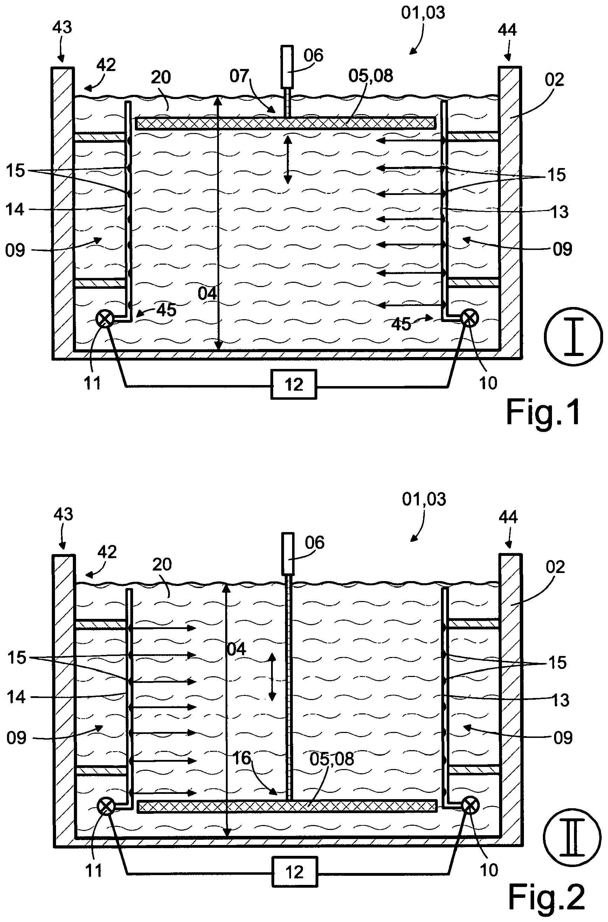

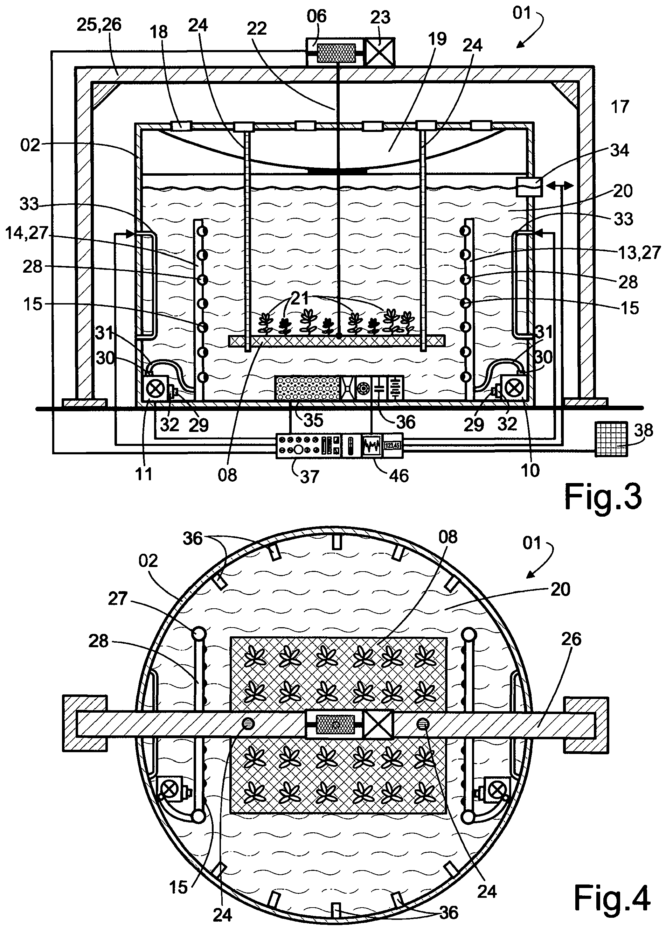

In der **Figur 1** ist im schematischen Querschnitt die Vorrichtung **01** mit einem Behälter **02** gezeigt. Dieser bildet einen benthischen Mesokosmos **03** und ist mit nicht-gefiltertem Seewasser **20** bis zu einer konstanten Füllhöhe **04** gefüllt. Dabei reicht die Füllhöhe **04** bis in den oberen Bereich **42** des Behälters **02.** Der Behälter **02** hat im gezeigten Ausführungsbeispiel einen inneren Durchmesser von 170 cm und eine Wandhöhe von 85 cm. Er fasst ein Wasservolumen von 1.800 l. Seine doppelte Wandung besteht aus Hart-Polyethylen mit einer innenliegenden, 10 cm dicken Schicht Polystyrolschaum, wodurch der Behälter **02** gut isoliert ist und starke Temperaturschwankungen des Wassers 20 durch die Umgebungstemperatur vermieden werden. Weiterhin ist eine horizontal angeordnete Substratplatte **05** dargestellt, die über eine in der **Figur 1** nicht weiter ausgeführte Aufhängungsvorrichtung **06** an einem in der **Figur 1** nicht gezeigten Gestell **25** (vergleiche **Figur 3**) befestigt ist. Über die Aufhängungsvorrichtung **06** ist die Substratplatte **05** in unterschiedlichen Höhen bezüglich des Wassers **20** im Behälter **02** positionierbar (Doppelpfeil). Dazu kann beispielsweise ein in der **Figur 1** nicht gezeigter Schrittmotor **23** eingesetzt werden, der für eine schrittweise Anhebung der Substratplatte **05** über einen Zeitraum von ca. 6 Stunden sorgt (von der Position der Substratplatte **05** bei Flut). Die Substratplatte **05** ist im gezeigten Ausführungsbeispiel als grobmaschige, steife Gitterplatte **08** ausgeführt, auf der verschiedene, in der **Figur 1** nicht gezeigte Organismen **21** gut anwachsen oder anheften können.

In der **Figur 1** ist die Situation bei eingetretener Ebbe und damit die erste Steuerungsphase **I** gezeigt. Die Substratplatte **05** befindet sich in einer oberen Höhenposition **07** im Behälter **02.** Es befindet sich nur wenig Wasser **20** oberhalb der Substratplatte **05.** Bei Ebbe kann die Substratplatte **05** auch völlig aus dem Wasser **20** herausragen, wenn ein Trockenfallen der Substratplatte **05** erwünscht ist.

Weiterhin ist in der **Figur 1** eine Strömungseinrichtung **09** dargestellt. Im gewählten Ausführungsbeispiel umfasst diese zwei Pumpen **10, 11**, eine Steuerungseinrichtung **12** und zwei Rohranordnungen **13, 14,** die entlang der Füllhöhe **04** des Wassers **20** an gegenüberliegenden Seiten **43, 44** des Behälters **02** angeordnet sind und einander gegenüberliegende Strömungsöffnungen **15** aufweisen. Bei Ebbe wird über die Steuerungseinrichtung **12** die rechte Pumpe **10** betrieben, sodass aus den Strömungsöffnungen **15** der rechten Rohranordnung **13** Wasser **20** austritt. Über den Querschnitt und die Höhe des Behälters **02** entsteht so im Wasser **20** eine laminare Strömung (angedeutet durch die Pfeile), die dem ablaufenden Wasser **20** bei eintretender Ebbe entspricht. Zur **Figur 2** nicht erläuterte Bezugszeichen sind der Beschreibung zu **Figur 1** zu entnehmen.

In der **Figur 2** ist die Situation bei eingetretener Flut und damit die zweite Steuerungsphase **II** gezeigt. Die Substratplatte **05** befindet sich in einer unteren Höhenposition **16** im Behälter **02.** Es befindet sich viel Wasser **20** oberhalb der Substratplatte **05.** Bei Flut wird über die Steuerungseinrichtung **12** die linke Pumpe **11** betrieben, sodass aus den Strömungsöffnungen **15** der linken Rohranordnung **14** Wasser **20** austritt. Es ergibt sich eine laminare Strömung (angedeutet durch Pfeile) in zur Strömung bei Ebbe entgegengesetzter Richtung, die dem auflaufenden Wasser **20** bei eintretender Flut entspricht.

Die Aufhängungsvorrichtung **06** ist mit der Steuerungsvorrichtung **12** bezüglich der Simulation von Ebbe und Flut synchronisiert. Das bedeutet, dass die von der Steuerungsrichtung **12** beeinflussbare Strömungsrichtung im Behälter **02** mit der von der Aufhängungsvorrichtung **06** gesteuerten Höhenposition der Substratplatte **05** korreliert wird. Beim Erreichen des Niedrigwassers hat die Substratplatte **05** ihre obere Höhenposition **07,** beim Erreichen des Hochwassers ihre untere Höhenposition **16** eingenommen. Der Höhenverlauf kann dabei über die Aufhängungsvorrichtung **06** gesteuert werden. Es sind lineare, sinusförmige oder auch andere sinnvolle Verläufe möglich.

In der **Figur 3** ist eine detaillierte Seitenansicht der Anordnung **01** nach der Erfindung dargestellt. Zu erkennen ist der Behälter **02,** der im gewählten Ausführungsbeispiel zylindrisch ausgebildet ist (vergleiche auch **Figur 4**). Auf dem Behälter **02** ist ein lichtdurchlässiger Deckel **17** angeordnet, der den Behälter **01** nach oben verschließt. Der Deckel **17** weist einen Scharniersteg **18** auf, von dem nach beiden Seiten eine öffenbare Klappe **19** abgeht. Im Behälter **01** befindet sich Seewasser **20.** Im Seewasser **20** ist eine Gitterplatte **08** angeordnet, auf der Organismen **21** angesiedelt sind, die dem Gezeiteneinfluss unterworfen werden sollen. Die Gitterplatte **08** ist über einen zentralen Draht **22** mit der verstellbaren Aufhängungsvorrichtung **06** verbunden. Der Draht **22** wird über einen Schrittmotor **23** eingeholt oder ausgefahren. Zur Stabilisierung ist die Gitterplatte **08** an zwei vertikalen Führungsstangen **24** geführt. Die Führungseinrichtung **06** ist auf einem Gestell **25,** im Ausführungsbeispiel in der Form eines Portals **26,** gelagert. An dem Portal **26** sind auch die beiden Führungsstangen **24** befestigt. Alternativ können die Führungsstangen 24 auch am Deckel 17 befestigt sein.

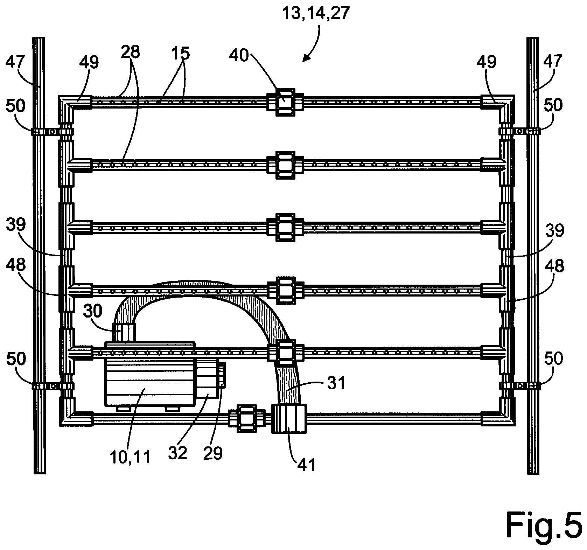

Rechts und links von der Gitterplatte **08** sind die Rohranordnungen **13, 14** in Form von Strömungsgittern **27** mit horizontalen Rohrabschnitten **28,** in denen sich die Strömungsöffnungen **15** befinden, dargestellt (weitere Details siehe **Figur 5**). Am Fuße jedes Strömungsgitters **27** sind Pumpen **10, 11** mit jeweils einem Ansaugstutzen **29** und einem Auslassstutzen **30,** der über einen Schlauch **31** mit einem Rohrabschnitt **28** verbunden ist, angeordnet. Hinter den Ansaugstutzen **29** befinden sich Filter **32.**

Hinter den Strömungsgittern **27** sind Luftauslässe **33** zur Erzeugung eines Luftvorhangs im Wasser **20** angeordnet. Weitere Zuführungen und Auslässe, beispielsweise für Seewasser oder CO₂, sind in Form von Stutzen **34** an der rechten Seite des Behälters **02** angedeutet. Diese Stutzen **34** werden auch für einen externen Kühlkreislauf und externe Messstrecken genutzt (in der **Figur 3** nicht dargestellt). Weiterhin sind diverse Wasseraufbereitungseinrichtungen **35** und Messsensoren **36** vorgesehen. Alle Komponenten sind entsprechend mit einer externen Steuerungseinrichtung **37** bzw. Messeinrichtung **46** verbunden sind (Pfeile), die insbesondere für die Ansteuerung der einzelnen Komponenten sorgt. Bei einer Positionierung von jeweils zwei Behältern **02** nebeneinander in einem Versuchsfeld (nicht gezeigt), kann jeweils eine externe Steuerungseinrichtung **37** immer zwei Behältern **02** zugeordnet sein und mittig zwischen ihnen liegen. Alle externen Steuerungseinrichtungen **37** sind dann mit einer zentralen Steuerungseinrichtung **38** verbunden, auf der insbesondere Software zur Synchronisation der Komponenten, Datenaufnahme und Datenauswertung läuft.

Die **Figur 4** zeigt die Anordnung gemäß **Figur 3** in der Draufsicht ohne den durchsichtigen Deckel **17.** In dieser Ansicht sind die quadratische Ausprägung der Gitterplatte **08** und die ebene Ausprägung der Strömungsgitter **27** mit ihrer gegenüberliegenden Anordnung zur Erzeugung einer laminaren Strömung parallel zum Durchmesser des Behälters **02** sowie die balkenartige Ausführung des Portals **26** gut zu erkennen. Weitere Messsensoren **36** sind ebenfalls dargestellt. Hier gezeigte, nicht erläuterte Bezugszeichen sind der Beschreibung zu **Figur 3** zu entnehmen.

In der **Figur 5** ist die Rohranordnung **13** bzw. **14** in Form des Strömungsgitters **27** in der Ansicht dargestellt. Zu erkennen sind die horizontalen, parallelen Rohrabschnitte **28** mit den Strömungsöffnungen **15** (beispielsweise 4 mm Löcher). Rechts und links sind die Rohrabschnitte **28** über Verbindungsrohre **39** und T-förmige Koppelstücke **48** und rechtwinklige Koppelstücke **49** miteinander verbunden, die das Strömungsgitter **27** seitlich abschließen und eine Wasserverteilung auf die einzelnen Rohrabschnitte **28** ermöglichen. Das Strömungsgitter **27** wird mittels Halterungen **50** und Haltestangen **47** im Behälter **02** gehaltert.

Im Mittenbereich weist jeder Rohrabschnitt **28** eine Schraubverbindung **40** auf. Somit kann das Strömungsgitter **27** in zwei Teile zerlegt und gereinigt werden. Gezeigt ist auch die Pumpe **10** bzw. **11** mit Ansaugstutzen **29** und Filter **32** und Auslassstutzen **30,** der über einen Schlauch **31** mit einem Verbindungsstück **41** im untersten Rohrabschnitt **28** des Strömungsgitters **27** verbunden ist. Um eine gleichmäßige Ausströmung zu gewährleisten, befindet sich das Verbindungsstück **41** in der Mitte des untersten Rohrabschnitts **28.** Weiterhin weist dieser keine Strömungsöffnungen **15** auf, was ebenfalls der Vergleichmäßigung der Auslassströmung dient. Mit dem derart gestalteten Strömungsgitter **27** in Verbindung mit der alternierenden Ausströmung aus beiden Strömungsgittern **27** werden bei der mit der Erfindung beanspruchten Vorrichtung **01** zur Tidensimulation in optimaler Weise die Strömungsverhältnisse bei Ebbe und Flut simuliert.

### Bezugszeichenliste

- **01**: Vorrichtung
- **02**: Behälter
- **03**: benthischer Mesokosmos
- **04**: konstante Füllhöhe von 20
- **05**: Substratplatte
- **06**: Aufhängungsvorrichtung
- **07**: obere Höhenposition von 05
- **08**: Gitterplatte
- **09**: Strömungseinrichtung
- **10**: erste Pumpe
- **11**: zweite Pumpe
- **12**: Steuerungseinrichtung
- **13**: erste Rohranordnung
- **14**: zweite Rohranordnung
- **15**: Strömungsöffnung
- **16**: untere Höhenposition von 05
- **17**: Deckel
- **18**: Scharniersteg
- **19**: Klappe
- **20**: Wasser
- **21**: Organismus
- **22**: Draht
- **23**: Schrittmotor
- **24**: Führungsstange
- **25**: Gestell
- **26**: Portal
- **27**: Strömungsgitter
- **28**: Rohrabschnitt
- **29**: Ansaugstutzen
- **30**: Auslassstutzen
- **31**: Schlauch
- **32**: Filter
- **33**: Luftauslass
- **34**: Stutzen
- **35**: Wasseraufbereitungseinrichtung
- **36**: Messsensor
- **37**: externe Steuerungseinrichtung
- **38**: zentrale Steuerungseinrichtung
- **39**: Verbindungsrohr
- **40**: Schraubverbindung
- **41**: Verbindungsstück
- **42**: oberer Bereich von 02
- **43**: eine Seite von 02
- **44**: andere Seite von 02
- **45**: unterer Bereich von 13, 14
- **46**: Messgerät
- **47**: Haltestange
- **48**: T-förmiges Koppelstück
- **49**: rechtwinkliges Koppelstück
- **50**: Halterung

## Patentansprüche

1. Vorrichtung (01) zur Simulation von Ebbe und Flut mit zumindest einem mit Wasser (20) bis zu einer konstanten Füllhöhe (04) gefüllten Behälter (02) und einer horizontal angeordneten Substratplatte (05), die mittels einer über einen Motor (23) höhenverstellbaren Aufhängungsvorrichtung (06), über die die Substratplatte (05) in einer oberen Höhenposition (07) zur Simulation des Wasserstandes bei Ebbe und in einer unteren Höhenposition (16) zur Simulation des Wasserstandes bei Flut halterbar ist, an einem Gestell (25) befestigt ist,
**dadurch gekennzeichnet, dass**
die konstante Füllhöhe (04) des Wassers (20) bis in den oberen Bereich (42) des Behälters (02) reicht und die Substratplatte (05) auch im Wasser (20) höhenverstellbar angeordnet ist und dass eine Strömungseinrichtung (09) mit zumindest einer Pumpe (10, 11), einer Steuerungseinrichtung (12) und zwei ebenen Rohranordnungen (13, 14) vorgesehen ist, die entlang der Füllhöhe (04) des Wassers (20) an gegenüberliegenden Seiten (43, 44) des Behälters (02) angeordnet sind und einander gegenüberliegende Strömungsöffnungen (15) aufweisen, wobei in einer ersten Steuerungsphase (I) der Steuerungseinrichtung (12) in die eine Rohranordnung (13) zur Simulation der Strömungsverhältnisse bei Ebbe und in einer zweiten Steuerungsphase (II) in die gegenüberliegende Rohranordnung (14) zur Simulation der Strömungsverhältnisse bei Flut Wasser (20) pumpbar ist und wobei die höhenverstellbare Aufhängungsvorrichtung (06) mit der Steuerungsvorrichtung (12) bezüglich der Simulation von Ebbe und Flut synchronisiert ist.

2. Vorrichtung (01) nach Anspruch 1,
**dadurch gekennzeichnet, dass**
jede Rohranordnung (13, 14) in Form eines Strömungsgitters (27) mit parallelen Rohrabschnitten (28) ausgebildet ist, das sich über die Füllhöhe (04) des Wassers (20) erstreckt.

3. Vorrichtung (01) nach Anspruch 1 der 2 ,
**dadurch gekennzeichnet, dass**
im Behälter (02) für jede Rohranordnung (13, 14) eine separate Pumpe (10, 11) vorgesehen ist, die einen Ansaugstutzen (29) für das Wasser (20) im Behälter (02) und einen Auslassstutzen (20), der mit der jeweiligen Rohranordnung (13, 14) verbunden ist, aufweist.

4. Vorrichtung (01) nach Anspruch 3,
**dadurch gekennzeichnet, dass**
die Pumpe (10, 11) jeweils im unteren Bereich (45) der Rohranordnung (13, 14) mit dieser verbunden ist.

5. Vorrichtung (01) nach einem der vorangehende Ansprüche,
**dadurch gekennzeichnet, dass**
hinter dem Ansaugstutzen (29) der Pumpen (10, 11) ein Filter (32) angeordnet ist.

6. Vorrichtung (01) nach einem der vorangehende Ansprüche,
**dadurch gekennzeichnet, dass**
der Behälter (02) zylindrisch ausgebildet ist.

7. Vorrichtung (01) nach einem der vorangehende Ansprüche,
**dadurch gekennzeichnet, dass**
die Substratplatte (05) als Gitterplatte (08) ausgebildet ist.

8. Vorrichtung (01) nach einem der vorangehende Ansprüche,
**dadurch gekennzeichnet, dass**
die Substratplatte (05) an vertikalen Führungsstangen (24) geführt ist.

9. Vorrichtung (01) nach einem der vorangehende Ansprüche,
**dadurch gekennzeichnet, dass**
die Steuerungsphasen (I, II) der Steuerungseinrichtung (12) linear oder sinusförmig oder beliebig programmierbar ausgebildet sind.

10. Vorrichtung (01) nach einem der vorangehende Ansprüche,
**dadurch gekennzeichnet, dass**
die höhenverstellbare Aufhängungsvorrichtung (06) schrittweise verstellbar ausgebildet ist.

11. Vorrichtung (01) nach einem der vorangehende Ansprüche,
**dadurch gekennzeichnet, dass**
verschiedene Wasseraufbereitungsvorrichtungen (35) vorgesehen sind.

12. Vorrichtung (01) nach einem der vorangehende Ansprüche,
**dadurch gekennzeichnet, dass**
verschiedene Messsensoren (36) im Wasser (20) des Behälters (02) angeordnet sind, die zu Messgeräten (46) außerhalb des Behälters führen.

13. Vorrichtung (01) nach einem der vorangehende Ansprüche,
**dadurch gekennzeichnet, dass**
der Behälter (02) mit einem lichtdurchlässigen Deckel (17) abgedeckt ist.

14. Vorrichtung (01) nach einem der vorangehende Ansprüche,
**dadurch gekennzeichnet, dass**
das Gestell (25) für die Aufhängungsvorrichtung (06) als Portal (26) ausgebildet ist.

15. Vorrichtung (01) nach einem der vorangehende Ansprüche,
**dadurch gekennzeichnet, dass**
zumindest zwei Behälter (02) nebeneinander angeordnet sind.

## Claims

1. Device (01) for simulating ebb and flow with at least one container (02) filled to a constant filling level (04) with water (20) and a horizontally arranged substrate plate (05), which is fastened to a frame (25) by means of a suspension device (06) which is height-adjustable via a motor (23) and by means of which the substrate plate (05) is holdable in an upper height position (07) for simulating the water level at the time of ebb and in a lower height position (16) for simulating the water level at the time of flow, **characterised in that** the constant filling level (04) of the water (20) extends into the upper area (42) of the container (02) and the substrate plate (05) is also arranged in a height-adjustable manner in the water (20) and **in that** a flow device (09) with at least one pump (10, 11), a control device (12) and two level pipe arrangements (13, 14) is provided which are arranged along the filling level (04) of the water (20) on opposite sides (43, 44) of the container (02) and comprise opposing flow openings (15), wherein in a first control phase (I) of the control device (12) water (20) can be pumped into the one pipe arrangement (13) to simulate the flow conditions at the time of ebb and in a second control phase (II) into the opposite pipe arrangement (14) to simulate the flow conditions the time of flow and wherein the height-adjustable suspension device (06) is synchronised with the control device (12) with regard to the simulation of ebb and flow.

2. Device (01) according to claim 1 **characterised in that** each pipe arrangement (13, 14) is designed in the form of a flow grid (27) with parallel pipe sections (28) extending over the filling level (04) of the water (20) .

3. Device (01) according to claim 1 or 2 **characterised in that** in the container (02) for each pipe arrangement (13, 14) a separate pump (10, 11) is provided which has an inlet connection (29) for the water (20) in the container (02) and an outlet connection (20) which is connected to the respective pipe arrangement (13, 14).

4. Device (01) according to claim 3 **characterised in that** the pump (10, 11) is in each case connected to the pipe arrangement (13, 14) in its lower area (45).

5. Device (01) according to any one of the preceding claims **characterised in that** behind the inlet connection (29) of the pumps (10, 11) a filter (32) is arranged.

6. Device (01) according to any one of the preceding claims **characterised in that** the container (02) is cylindrical in design.

7. Device (01) according to any one of the preceding claims **characterised in that** the substrate plate (05) is designed as grid plate (08).

8. Device (01) according to any one of the preceding claims **characterised in that** the substrate plate (05) is guided on vertical guide rods (24).

9. Device (01) according to any one of the preceding claims **characterised in that** the control phases (I, II) of the control device (12) are designed to be programmable in a linear, sinusoidal or any other manner.

10. Device (01) according to any one of the preceding claims **characterised in that** the height-adjustable suspension device (06) is designed to be adjustable in steps.

11. Device (01) according to any one of the preceding claims **characterised in that** various water treatment devices (35) are provided.

12. Device (01) according to any one of the preceding claims **characterised in that** various measuring sensors (36) are arranged in the water (20) of the container (02) which lead to measuring devices (46) outside the container.

13. Device (01) according to any one of the preceding claims **characterised in that** the container (02) is covered with a light-permeable lid (17).

14. Device (01) according to any one of the preceding claims **characterised in that** the frame (25) for the suspension device (06) is designed as a portal (26).

15. Device (01) according to any one of the preceding claims **characterised in that** at least two containers (02) are arranged next to each other.

## Revendications

1. Dispositif (01), destiné à simuler le reflux et le flux, comprenant au moins un réservoir (02) rempli d'eau (20) jusqu'à une hauteur de remplissage (04) constante et une plaque de substrat (05) placée à l'horizontale, qui au moyen d'un dispositif d'accrochage (06) réglable en hauteur à l'aide d'un moteur (23) par l'intermédiaire duquel la plaque de substrat (05) peut être maintenue dans une position en hauteur (07) supérieure, pour la simulation du niveau d'eau en cas de reflux et dans une position en hauteur (16) inférieure, pour la simulation du niveau d'eau en cas de flux, est fixée sur un châssis (25), **caractérisé en ce que** la hauteur de remplissage (04) constante de l'eau (20) arrive jusque dans la zone supérieure (42) du réservoir (02) et **en ce que** la plaque de substrat (05) est également placée en étant réglable en hauteur dans l'eau (20) et **en ce qu'**un dispositif d'écoulement (09) pourvu d'au moins une pompe (10, 11), d'un système de commande (12) et de deux agencements de tubes (13, 14) plans est prévu, qui le long de la hauteur de remplissage (04) de l'eau (20) sont placés sur des côtés (43, 44) opposés du réservoir (02) et qui comportent orifices d'écoulement (15) en vis-à-vis, dans une première phase de commande (I) du système de commande (12), de l'eau étant pompable dans l'un des agencements de tubes (13), pour la simulation des conditions d'écoulement en cas de reflux et dans une deuxième phase de commande (II), de l'eau étant pompable dans l'agencement de tubes (14) en vis-à-vis, pour la simulation dez conditions d'écoulement en cas de flux d'eau (20) et le dispositif d'accrochage (06) réglable en hauteur étant synchronisé avec le dispositif de commande (12) en ce qui concerne la simulation de reflux et de flux.

2. Dispositif (01) selon la revendication 1, **caractérisé en ce que** chaque agencement de tubes (13, 14) est conçu sous la forme d'une grille d'écoulement (27), pourvue de tronçons tubulaires (28) parallèles, qui s'étend sur la hauteur de remplissage (04) de l'eau (20) .

3. Dispositif (01) selon la revendication 1 ou 2, **caractérisé en ce que** dans le réservoir (02), une pompe (10, 11) séparée qui comporte une tubulure d'aspiration (29) pour l'eau (20) dans le réservoir (02) et une tubulure d'évacuation (20) qui est reliée avec l'agencement de tubes (13, 14) respectif est prévue pour chaque agencement de tubes (13, 14).

4. Dispositif (01) selon la revendication 3, **caractérisé en ce que** chaque fois dans la région inférieure (45) de l'agencement de tubes (13, 14), la pompe (10, 11) est reliée avec celui-ci.

5. Dispositif (01) selon l'une quelconque des revendications précédentes, **caractérisé en ce qu'**un filtre (32) est placé derrière la tubulure d'aspiration (29) des pompes (10, 11).

6. Dispositif (01) selon l'une quelconque des revendications précédentes, **caractérisé en ce que** le réservoir (02) est conçu sous forme cylindrique.

7. Dispositif (01) selon l'une quelconque des revendications précédentes, **caractérisé en ce que** la plaque de substrat (05) est conçue sous la forme d'une plaque grillagée (08).

8. Dispositif (01) selon l'une quelconque des revendications précédentes, **caractérisé en ce que** la plaque de substrat (05) est guidée sur des barres de guidage (24) verticales.

9. Dispositif (01) selon l'une quelconque des revendications précédentes, **caractérisé en ce que** les phases de commande (I, II) du système de commande (12) sont programmables de manière linéaire ou sinusoïdale ou de manière quelconque.

10. Dispositif (01) selon l'une quelconque des revendications précédentes, **caractérisé en ce que** le dispositif d'accrochage (06) réglable en hauteur est conçu pour être réglable progressivement.

11. Dispositif (01) selon l'une quelconque des revendications précédentes, **caractérisé en ce que** différents dispositifs de traitement de l'eau (35) sont prévus.

12. Dispositif (01) selon l'une quelconque des revendications précédentes, **caractérisé en ce que** différents capteurs de mesure (36) qui mènent vers des instruments de mesure (46) à l'extérieur du réservoir sont placés dans l'eau (20) du réservoir (02).

13. Dispositif (01) selon l'une quelconque des revendications précédentes, **caractérisé en ce que** le réservoir (02) est recouvert d'un couvercle (17) transparent.

14. Dispositif (01) selon l'une quelconque des revendications précédentes, **caractérisé en ce que** le châssis (25) pour le dispositif d'accrochage (06) est conçu sous la forme d'un portique (26).

15. Dispositif (01) selon l'une quelconque des revendications précédentes, **caractérisé en ce qu'**au moins deux réservoirs (02) sont placés côte à côte.
